# EUROPEAN PATENT APPLICATION

(11) **EP 4 332 781 A1**
(43) Date of publication of application: **06.03.2024**
(21) Application number: 22894185.2
(22) Date of filing: 16.05.2022
(51) Int. Cl.: G06F 13/16

(54) **DATA PROCESSING METHOD AND APPARATUS, AND CACHE, PROCESSOR AND ELECTRONIC DEVICE**

(30) Priority: 17.11.2021 CN 202111363242
(71) Applicant: Hygon Information Technology Co., Ltd., Tianjin 300392 (CN)
(72) Inventor: ZHAI, Haifeng, Tianjin 300392 (CN); ZUO, Hang, Tianjin 300392 (CN); WANG, Sen, Tianjin 300392 (CN); PAN, Yu, Tianjin 300392 (CN); MEI, Chengqiang, Tianjin 300392 (CN)
(74) Representative: Regimbeau
(86) International application number: PCT/CN2022/092980
(87) International publication number: WO 2023/087640

(57) **Abstract**

A data processing method and apparatus, and a cache, a processor and an electronic device. The data processing method comprises: receiving a data processing request, wherein data that is requested by the data processing request comprises data that is suitable for being stored in at least two cache units, and main memory addresses of the data in each of the cache units are consecutive; and when main memory address information of each cache unit that satisfies a mapping relationship comprises all the main memory addresses, simultaneously performing data processing on the data which corresponds to the main memory addresses. By means of the method, a bandwidth is improved such that the efficiency of data transmission is improved.

## Description

### CROSS-REFERENCE TO RELATED APPLICATION

The present application claims priority of the Chinese Patent Application No. 202111363242.3, filed on November 17, 2021, the disclosure of which is incorporated herein by reference in its entirety as part of the present application.

### TECHNICAL FIELD

The embodiments of the present disclosure relate to a data processing, apparatus, a cache, a processor and an electronic device.

### BACKGROUND

In a typical computer structure, a processor and multi-level memory are commonly included. In the multi-level memory, the main memory stores instructions and data. The processor acquires instructions and corresponding data from the main memory, executes the instructions, and writes the result data back to the main memory. In addition, a level one cache or a multi-level cache is present between the processor and the main memory. The cache is configured to reduce the time that it takes for a processor to read instructions and data. Upon the processor being required to read a certain address data in the main memory, the processor first checks whether the data exists in the cache. In response to the data being included in the cache, the processor reads the data directly from the cache, and the speed of reading the data from the cache is much faster than the speed of reading the data from the main memory. Otherwise, the cache reads the data from the main memory, stores the data, and returns the data to the main memory.

In a case where the operation speed of the processor is increased and the demand for data is increased, the data is required to be improved to acquire efficiency, the width of a data channel between caches multiplying a number of times a channel may transmit data per unit time is bandwidth, which indicates the maximum amount of data that is acquired by the cache per unit time, and increasing the bandwidth is required for increasing the efficiency of data acquisition.

Therefore, how to increase the bandwidth, and then increase the efficiency of data transmission, becomes a technical problem that is required to be solved by those skilled in the art.

### SUMMARY

At least one embodiment of the present disclosure provides a data processing method, comprising: receiving a data processing request, wherein data requested by the data processing request comprises data that is suitable for being stored in at least two cache units, and main memory addresses of data in each of the cache units are consecutive; and in a case where main memory address information of each of the cache units that satisfy a mapping relationship comprises all the main memory addresses, simultaneously performing data processing on data corresponding to each of the main memory addresses, wherein each of the cache units that satisfy the mapping relationship is a cache unit corresponding to a main memory address in the data processing request.

For example, the data processing method provided by one embodiment of the present disclosure further comprises: in a case where the main memory address information of each of the cache units that satisfy the mapping relationship does not comprise all the main memory addresses, respectively writing each of the main memory addresses that are missing into each of cache units to be processed, wherein original main memory address information of each of the cache units to be processed is different from each of the main memory addresses corresponding to data of the data processing request.

For example, in the data processing method provided by one embodiment of the present disclosure, the cache units to be processed comprise at least one of a cache unit to be replaced and a free cache unit.

For example, in the data processing method provided by one embodiment of the present disclosure, the cache units to be replaced are determined by a Least Recently Used principle (RLU).

For example, in the data processing method provided by one embodiment of the present disclosure, the data processing request comprises a data read request, and in a case where the main memory address information of each of the cache units that satisfy the mapping relationship comprises all the main memory addresses, the step of simultaneously performing data processing on data corresponding to each of the main memory addresses, comprising: in a case where the main memory address information of each of the cache units that satisfy the mapping relationship comprises all the main memory addresses, simultaneously returning data corresponding to all the main memory addresses.

For example, in the data processing method provided by one embodiment of the present disclosure, the data processing request comprises a data read request, and in a case where the main memory address information of each of the cache units that satisfy the mapping relationship does not comprise all the main memory addresses, after the step of respectively writing each of the main memory addresses that are missing into each of the cache units to be processed, further comprises: generating and sending missing data read requests for reading data corresponding to each of the main memory addresses that are missing.

For example, in the data processing method provided by one embodiment of the present disclosure, the step of generating the missing data read requests for reading data corresponding to each of the main memory addresses that are missing comprises: generating each of the missing data read requests for respectively reading data corresponding to each of the main memory addresses that are missing, wherein a number of the missing data read requests is same as a number of each of the main memory addresses that are missing; and the data processing method further comprising: in a case of receiving all data corresponding to each of the main memory addresses that are missing, simultaneously returning data corresponding to all the main memory addresses.

For example, in the data processing method provided by one embodiment of the present disclosure, the step of generating missing data read requests for reading data corresponding to each of the main memory addresses that are missing comprises: acquiring main memory addresses of addresses being consecutive in each of the main memory addresses that are missing, and obtaining each of consecutive main memory addresses; generating consecutive missing data read requests for reading data corresponding to each of the consecutive main memory addresses that are missing according to each of the consecutive main memory addresses; and the data processing method further comprising: in a case of receiving all data corresponding to each of the main memory addresses that are missing, simultaneously returning data corresponding to all the main memory addresses.

For example, in the data processing method provided by one embodiment of the present disclosure, the data processing request comprises a data write request, and in a case where the main memory address information of each of the cache units that satisfy the mapping relationship comprises all the main memory addresses, the step of simultaneously performing data processing on data corresponding to each of the main memory addresses, comprising: in a case where the main memory address information of each of the cache units that satisfy the mapping relationship comprises all the main memory addresses, simultaneously receiving data corresponding to each of the main memory addresses, and writing each of the data into a corresponding cache unit.

For example, in the data processing method provided by one embodiment of the present disclosure, the data processing request comprises a data write request, and in a case where the main memory address information of each of the cache units that satisfy the mapping relationship does not comprise all the main memory addresses, after the step of respectively writing each of the main memory addresses that are missing into each of the cache units to be processed, further comprises: simultaneously receiving data corresponding to each of the main memory addresses, and writing each of the data into a corresponding cache unit.

For example, in the data processing method provided by one embodiment of the present disclosure, the data processing request further comprises a data processing request type identification, and the data processing request type identification is used for identifying that data requested by the data processing request comprises data suitable for being stored in at least two cache units.

For example, in the data processing method provided by one embodiment of the present disclosure, an implementation method of the data processing request type identification comprises increasing a number of main memory address identification bits or increasing a type of request type identification.

At least one embodiment of the present disclosure further provides a data processing apparatus, comprising: a data processing request module, suitable for receiving a data processing request, wherein data requested by the data processing request comprises data that is suitable for being stored in at least two cache units, and main memory addresses of data in each of the cache units are consecutive; and a data processing module, suitable for in a case where main memory address information of each of cache units that satisfy a mapping relationship comprises all the main memory addresses, simultaneously performing data processing on data corresponding to each of the main memory addresses, wherein each of the cache units that satisfy the mapping relationship is a cache unit corresponding to a main memory address in the data processing request.

For example, in the data processing apparatus provided by one embodiment of the present disclosure, the data processing module is also suitable for in a case where the main memory address information of each of the cache units that satisfy the mapping relationship does not comprise all the main memory addresses, respectively writing each of the main memory addresses that are missing into each of cache units to be processed, wherein original main memory address information of each of the cache units to be processed is different from a main memory address of data requested by the data processing request.

For example, in the data processing apparatus provided by one embodiment of the present disclosure, the data processing request module comprises: a data read request module, suitable for receiving a data read request, data requested by the data read request comprising data that is suitable for being stored in at least two cache units, and main memory addresses of data in each of the cache units being consecutive; and the data processing request module comprising: a data read operation module, suitable for in a case where the main memory address information of each of the cache units that satisfy the mapping relationship comprises all the main memory addresses, simultaneously returning data corresponding to all the main memory address.

For example, in the data processing apparatus provided by one embodiment of the present disclosure, the data processing request module comprises: a data read request module, suitable for receiving a data read request, data requested by the data read request comprising data that is suitable for being stored in at least two cache units, and main memory addresses of data in each of the cache units being consecutive; and the data processing request module comprising: a data read operation module, suitable for in a case where the main memory address information of each of the cache units that satisfy the mapping relationship does not comprise all the main memory addresses, respectively writing each of the main memory addresses that are missing into each of cache units to be processed, and generating and sending missing data read requests for reading data corresponding to each of the main memory addresses that are missing.

For example, in the data processing apparatus provided by one embodiment of the present disclosure, the data read operation module, is suitable for generating and sending the missing data read requests for reading data corresponding to each of the main memory addresses that are missing, comprising: generating each of the missing data read requests for respectively reading data corresponding to each of the main memory addresses that are missing, wherein a number of the missing data read requests is same as a number of each of the main memory addresses that are missing; and the data read operation module, also suitable for in a case of receiving all data corresponding to each of the main memory addresses that are missing, simultaneously returning data corresponding to all the main memory addresses.

For example, in the data processing apparatus provided by one embodiment of the present disclosure, the data read operation module, is suitable for generating and sending missing data read requests for reading data corresponding to each of the main memory addresses that are missing comprising: acquiring main memory addresses of addresses being consecutive in each of the main memory addresses that are missing, and obtaining each of consecutive main memory addresses; and generating consecutive missing data read requests for reading data corresponding to each of the consecutive main memory addresses that are missing according to each of the consecutive main memory addresses.

For example, in the data processing apparatus provided by one embodiment of the present disclosure, the data processing request module comprises: a data write request module, suitable for receiving a data write request, data requested by the data write request comprising data that is suitable for being stored in at least two cache units, and main memory addresses of data in each of the cache units are consecutive; and the data processing module comprising: a data write operation module, suitable for in a case where the main memory address information of each of cache units that satisfy the mapping relationship comprises all the main memory addresses, simultaneously writing data corresponding to all the main memory addresses.

For example, in the data processing apparatus provided by one embodiment of the present disclosure, the data processing request module comprises a data write request module, and the data processing apparatus comprises: a data write operation module, suitable for in a case where the main memory address information of each of the cache units that satisfy the mapping relationship does not comprise all the main memory addresses, respectively writing each of the main memory addresses that are missing into each of the cache units to be processed, simultaneously receiving data corresponding to each of the main memory addresses, and writing each of the data into a corresponding cache unit.

For example, in the data processing apparatus provided by one embodiment of the present disclosure, the data processing request further comprises a cache unit index of each of the cache units and a data processing request type identification, and the data processing request type identification is configured to identify data that is suitable for being stored in at least two cache units and is comprised by data requested by the data processing request.

For example, in the data processing apparatus provided by one embodiment of the present disclosure, an implementation method of the data processing request type identification comprises increasing a number of main memory address identification bits or increasing a type of request type identification.

At least one embodiment of the present disclosure further provides a cache, comprising a level one cache and a level two cache, wherein at least two cache units of the level one cache and at least two cache units of the level two cache are mapped simultaneously, and the level one cache and the level two cache both comprise the data processing apparatus of the embodiments of the present disclosure.

At least one embodiment of the present disclosure further provides a processor, wherein the processor executes computer-executable instructions to implement the data processing method of the embodiments of the present disclosure.

At least one embodiment of the present disclosure further provides an electronic device, comprising the processor of the embodiments of the present disclosure.

### BRIEF DESCRIPTION OF THE DRAWINGS

In order to illustrate the embodiments of the present disclosure more clearly, the following briefly introduces the accompanying drawings that are required to be configured in the embodiments, apparently, the accompanying drawings described below are only the embodiments of the present disclosure, and for those of ordinary skill in the art, without the premise of creative labor, other accompanying drawings are also acquired according to the accompanying drawings that are provided.
Fig. 1 is a structure diagram of a computer structure;
Fig. 2 is a structure diagram of a cache unit;
Fig. 3 is a structure diagram of a data processing request;
Fig. 4 is a flowchart of a data processing method that is provided by an embodiment of the present disclosure;
Fig. 5 is a structure diagram of a data processing request of a data processing method that is provided by an embodiment of the present disclosure;
Fig. 6 is another flowchart of a data processing method that is provided by an embodiment of the present disclosure;
Fig. 7 is an implementation example diagram of a data processing method that is provided by an embodiment of the present disclosure;
Fig. 8 is another example diagram of a data processing method that is provided by an embodiment of the present disclosure;
Fig. 9 is yet another flowchart of a data processing method that is provided by an embodiment of the present disclosure; and
Fig. 10 is a block diagram of a data processing apparatus that is provided by an embodiment of the present disclosure.

### DETAILED DESCRIPTION

The following describes the technical solutions of the embodiments of the present disclosure clearly and completely, in conjunction with the accompanying drawings of the embodiments of the present disclosure, and apparently, the described embodiments are partial embodiments of the present disclosure instead of all the embodiments. Based on the embodiments of the present disclosure, all other embodiments that are acquired by those of ordinary skill in the art without the premise of creative labor, belong to the scope of the protection of the present disclosure.

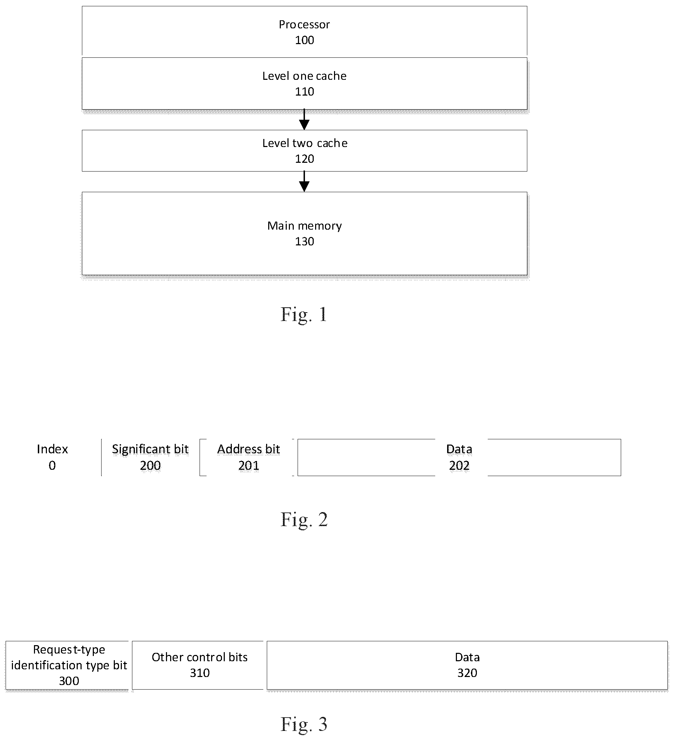

The following introduces a caching technique. Fig. 1 illustrates a structure diagram of a computer structure. As shown in Fig. 1, the computer structure mainly includes a processor 100, a cache and a main memory 130, and the cache includes a level one cache 110 and a level two cache 120.

The processor 100, may be a central processing unit, and may also be a graphics processor or a general-purpose graphics processor. All the processors in embodiments of the present disclosure are processors in the functional sense, that is, the computation and control cores with logical operations and control functions, and not a package box including a cache from the perspective of product packaging, and the processor in the embodiments of the present disclosure may correspond to a physical core of the processor described in certain literature.

The cache is divided into multi-level cache, the storage of a level one cache 110 is the smallest, the storage of a level two cache 120 is larger than the storage of a level one cache, and so forth, in the level one cache 110 with an extremely small storage, the cache sometimes is further divided into an instruction cache and a data cache, and only the data cache may store data, which further reduces the size of the data that the level one cache may store. Generally, a processor 100 exclusively uses a level one cache 110, a plurality of processors share a level two cache 120, in some embodiments, a processor may also exclusively use a level one cache 110 and a level two cache 120, a plurality of processors share a level three cache, and so forth, the processor 100 implements the data exchange between each other through sharing a cache. The cache has a faster access speed than the main memory and has a larger storage than the processor.

For a main memory 130, the main memory is a storage unit that stores all instructions and data, has a large storage but a slow access speed, and usually uses DRAM (Dynamic Random Access Memory)-type memory chip.

A dedicated level one cache 110 is connected behind the processor 100, the level one cache 110 is connected to the level two cache 120, and finally is connected to the main memory 130, the dedicated level one cache 110 generally has a small storage, and only stores the associated data that is currently processed by the corresponding processor. In a case where no hit is present in the level one cache 110, the data may be found in the level two cache 120. For example, in some embodiments, a level two cache 120 serves for a plurality of processors, but may serve only one processor once, and different processors implement access to each other and access to the main memory 130 through the level two cache. In other embodiments, a level two cache 120 is still exclusive to a processor, and a level three cache is shared. The processor 100 avoids direct access to the main memory 130 through access to a cache, thereby avoiding the time that is wasted by the huge speed difference and improving efficiency.

Fig. 2 illustrates a structure diagram of a cache unit. A cache includes a plurality of cache units (specifically, cache lines), each cache unit has the same structure, and the following illustrates by taking a cache line as an example. As shown in Fig. 2, each cache line is preceded by an index, such as the index: 0 shown in Fig. 2.

An index, also known as an offset, is the relative position of data in the cache structure.

A cache line mainly includes data 202 of storing data, an address bit 201, and a significant bit 200.

The data 202 is configured for storing data, the data in the embodiments of the present disclosure is a collective name of data information and instruction information, and the data that is stored by each of the cache units corresponds to the data of a main memory block in the main memory.

The address bit 201, is suitable for representing the address of data that is stored in a cache unit in main memory, because of a dedicated position conversion algorithm in the computer system, the index of the cache unit corresponding to any main memory address may be acquired, and because the same cache unit is mapping to a plurality of main memory addresses, a data address of the data in the main memory must be marked upon storing data in the cache unit, also known as the data address of the cache unit.

The significant bit 200, is configured to indicate whether a cache line is valid, in response to an invalid meaning that is represented by a value of the significant bit 200, regardless of whether data exists in the current cache unit, the processor accesses to the next level, and reloads the data.

Each cache line has an index, a variety of mapping relationships exist between the cache line and the main memory, in some embodiments, the mapping relationship is direct mapping, according to a received address, the cache line compares the index of the cache line, finds the exact cache line, and then compares the address bit 201, in response to the address bit 201 and the address information in the received request being the same, a hit exists, the cache line is operated accordingly, such as a reading back data operation or a writing data operation; in response to the address bit 201 and the address information in the received request being different, which represents a miss, for a data read request, the data only be found from the next level cache or the main memory, and for a data write operation, the cache line that may be written into the data is required to be determined.

Fig. 3 illustrates a structure diagram of a data processing request. As shown in Fig. 3, the data processing request mainly includes a request type identification type bit 300, another control bit 310, and a data bit 320.

The request type identification type bit 300, is configured to indicate whether a request type is a read operation request or a write operation request, in some embodiments, a read/write control bit has two bits, the read operation is represented by 00, and the write operation is represented by 11.

The data bit 320, is suitable for identifying the data information that is requested by the data processing request or the address information of the data main memory, it is noted that in response to a read operation request, no data exists and only the main memory address information exists, the cache line is found in the cache through the main memory address information that is identified by the data bit 320, and whether a hit exists is determined.

The other control bit 310, is configured for other controls.

The width of the data channel between all various levels of caches, the width of the data channel between a cache and a main memory are consistent with the data bandwidth of the cache line, in a process of data processing, a data processing request only requests for one cache unit (cache line), and determines whether a hit exist for one cache unit.

However, in some circumstances, the efficiency of data transmission is required to be further improved, and for this, the bandwidth is increased to improve the efficiency of data transmission.

The embodiments of the present disclosure provide a data processing method that may simultaneously process a plurality of cache units (cache lines) of consecutive data addresses, and may implement the improving the efficiency of data transmission by widening the bandwidth.

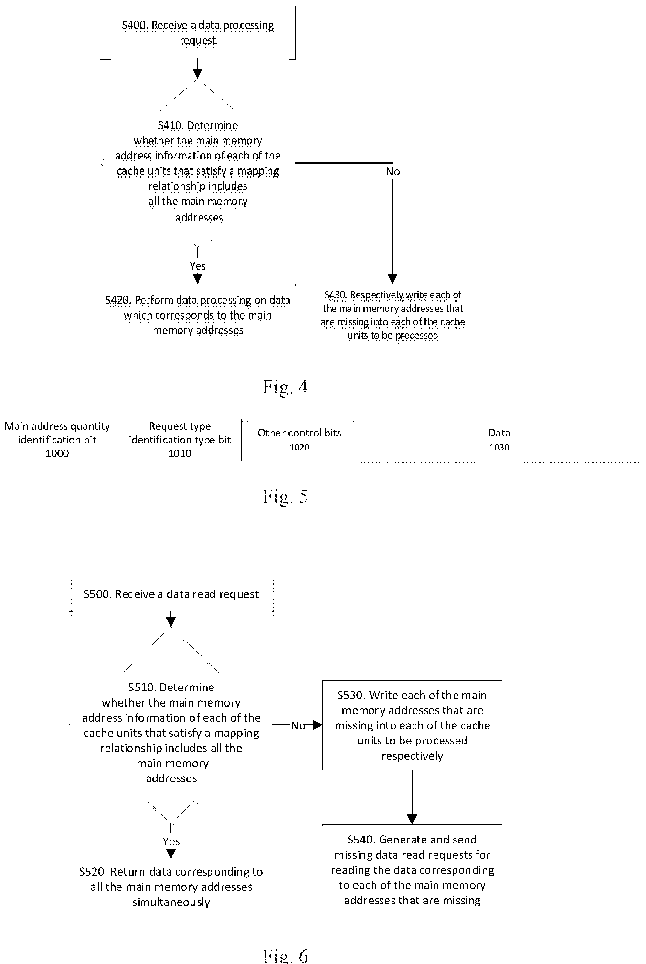

Fig. 4 illustrates a flowchart of a data processing method provided by an embodiment of the present disclosure.

As shown in Fig. 4, the process may include the following steps: in Step S400, receiving a data processing request.

In data processing, a data processing request is received firstly, it is easy to understand that the data processing request may be received by a cache or a main memory, and in a case where the data processing request is received by a cache, specifically, the cache may be one of a level one cache, a level two cache or a level three cache.

It is noted that in the process of receiving a data processing request, data requested by the data processing request includes data that is suitable for being stored in at least two cache units, and the main memory addresses of the data in each of the cache units are consecutive.

The data requested by the data processing request described herein includes the data that is suitable for being stored in at least two cache units, including the data that is requested being the data that is suitable for being stored in two cache units, as well as the data that is suitable for being stored in more than two cache units.

As mentioned earlier, a main memory may be divided into several main memory blocks, the size of each main memory block is same as the size of a cache unit, and the main memory address of data is the main memory block for storing data, and the offset within the block. The data requested by a data processing request is stored in at least two cache units, then the corresponding being stored in the main memory requires being stored in at least two main memory blocks, and the main memory address of data in each of cache units is consecutive, which does not indicate that two or more than two words or bytes in a cache unit or a main memory block are consecutive, but indicates that the data is located in consecutive main memory blocks and the cache unit is not necessarily physically consecutive, but the main memory blocks are consecutive.

For example, two data are required to be processed, the two data are respectively data 1 and data 2, data 1 is the 4th word that is stored in the main memory block 12, data 2 is the 7th word that is stored in the main memory block 13, the index of the cache unit corresponding to the main memory block 12 is 3, the index of the cache unit corresponding to the main memory block 13 is 8, because the main memory block 12 and the main memory block 13 are consecutive, then the data processing request for requesting data 1 and data 2 is the data processing request in the present disclosure. It is noted that all consecutions mentioned in the embodiments of the present disclosure are expressed in a consecutive manner described in this paragraph.

Specifically, the data requested by the data processing request includes data that is suitable for being stored in at least two cache units, the data may be identified by a data processing request type identification, that is, the data processing request includes the data processing request type identification, so that after various levels of caches or the main memory receive a data processing request, processing the data that is stored in at least two cache units may be determined.

In one specific embodiment, an implementation method of the data processing request type identification may include increasing a main memory address quantity identification bit or increasing a request type identification type. Fig. 5 illustrates a structure diagram of a data processing request of a data processing method provided by an embodiment of the present disclosure. As shown in Fig. 5, the data processing request may include: a main memory address quantity identification bit 1000, a request type identification type bit 1010, another control bit 1020, and data 1030.

For increasing the main memory address quantity identification bit 1000, for example: in response to the requested data including data that is suitable for being stored in two cache units, the particularity of the request may be represented by adding a main memory address quantity identification bit 1000, in a case where the value of the added main memory address quantity identification bit is 1, the requested data is the data that is stored in two cache units, although the address in the data processing request still has only one main memory address, the requested data is the data in the main memory address of the data processing request and the data in another main memory address that is adjacent to the main memory address of the data processing request; and of course, when the value of the added main memory address quantity identification bit is 0, the requested data is the data that is stored in one cache unit.

It is easy to understand that in response to the requested data including the data that is suitable for being stored in more than two cache units, then a number of the main memory address quantity identification bit 1000 may be increased according to the requirement.

For increasing the type of the request type identification, for example: in response to the requested data including the data that is suitable for being stored in two cache units, the identification of the request type may be represented by 2 bits, 00 represents an ordinary read data request, that is, the requested data includes a read request for the data that is suitable for being stored in one cache unit, 01 represents an ordinary write data request, that is, the requested data includes a write request for the data that is suitable for being stored in one cache unit, 10 represents a read request for the requested data that is stored in two cache units, 11 represents a write request for the requested data that is stored in two cache units, of course, in a case where the requested data includes the data that is suitable for being stored in the two cache units, the address in the data processing request still has only one main memory address, but the requested data is the data in the main memory address of the data processing request and the data in another main memory address that is adjacent to the main memory address of the data processing request.

Further, in a case where a data processing request is a data read request, the acquired data is required to be returned to a module that sends the data processing request, so the data processing request may also include the cache unit index of each of the cache units, thereby maintaining the smooth return of the data requested by the data processing request.

It is worth noting that the embodiments of the present disclosure also provide an identification method for a data processing request, a receiving module finds that the addresses of the data requested by several consecutive requests are consecutive by analyzing the received requests, the several consecutive requests are regarded as a consecutive processing request, and only in a case where all hits exist, the acquired data is returned to the parent module.

In Step S410, determine whether the main memory address information of each of the cache units that satisfy a mapping relationship includes all the main memory addresses, if so, Step S420 is executed, if not, Step S430 is executed.

In a case where a data processing request is received, data is processed based on the data processing request, which is required to determine that the data corresponding to the data processing request is stored in the module (various levels of caches or a main memory) that receives the request, in response to all the main memory addresses being included in the main memory address information of each of cache units that satisfy the mapping relationship, that is, all the requested data is backed up in a cache line, data being stored in the corresponding module is determined, at this time a hit exists, Step S420 is executed, otherwise, as long as the main memory address of one of the main memory blocks in the request has no hit, a miss exists, and Step S430 is executed.

It is easy to understand that each of the cache units that satisfy a mapping relationship indicates a cache unit corresponding to the main memory address in the data processing request, based on the different mapping methods, the corresponding cache unit is also different, in a case where the mapping method is a full association mapping, each of cache units that satisfy the mapping relationship indicates all the cache units, and the main memory address may be mapped with all the cache units; in a case where the mapping method is a group association mapping, each of cache units that satisfy the mapping relationship indicates a group of cache units that may correspond to the main memory address, that is, the main memory address may only be mapped with a part of the cache units; so in the process of searching, the corresponding searching scope is different.

The data requested by the data processing request is stored in the main memory block that is pointed by the main memory address information, in response to a hit, then the main memory address information of the cache unit includes the address of the data, the address of all the requested data is included, that is, all the data is stored in the cache.

In Step S420, simultaneously perform data processing on data corresponding to each of the main memory addresses.

The main memory address information of each of the cache units that satisfy a mapping relationship includes all the main memory addresses, and although the data requested by the data processing request involves a plurality of cache units, the data in a plurality of the cache units are processed simultaneously.

Taking a read operation as an example, for example, a level two cache receives a data read request that requests for reading consecutive data of the two main memory addresses, M1 and M2, and the main memory addresses of M1 and M2 respectively correspond to the cache units of the level two cache, S 1 and S2, then after the level two cache receives the data read request, the level two cache selects the S 1 cache unit and the S2 cache unit simultaneously, and transmits data content of the two cache units to the level one cache simultaneously, and the level one cache receives the data in the two cache units simultaneously.

It is easy to understand that in order to implement performing data processing simultaneously on the data corresponding to each of the main memory addresses, for the structure, between the module of sending the data processing request and the module of receiving the data processing request, at least two cache units are mapped simultaneously, that is, the mapping of at least two cache units is valid simultaneously.

In a case where the data requested by the data processing request is more than the data in two cache units, a number of cache units upon the mapping being valid simultaneously is the same as a number of the cache units corresponding to the data requested by the data processing request.

In some embodiments, levels of a cache may also be divided into a plurality of caches, a plurality of cache units are set into each of the caches.

It can be seen that in the data processing method that is provided by the embodiments of the present disclosure, a received data processing request corresponds to at least two cache units, each of the cache units simultaneously determines whether a hit exists or not, and in response to a hit, the data in each of the cache units is returned simultaneously, the data channel width between various level of caches, between a cache and a computation unit, and between a cache and the main memory may be increased to improve the data transmission efficiency without changing the size of the cache unit, thereby avoiding the change of the mapping relationship that is required for widening the cache unit, and the resulting increase in workload, increasing the bandwidth to improve the data transmission efficiency may be implemented on the basis of smaller workload; further, in the case of inconsistent proportion of a number of read/write requests, the proportion of data transmission bandwidth of the read/write requests may also be changed between two adjacent levels of transmission, so that the data transmission is more suitable for the usage requirement.

For example, in another embodiment, in order to maintain a smooth processing of data, the following steps may also be included: in Step S430, write each of the main memory addresses that are missing into each of the cache units to be processed.

In a case where the main memory address information of each of the cache units that satisfy a mapping relationship only includes a portion of the main memory addresses in the data processing request, or does not include completely, firstly some cache units are required to be determined, and the determined cache units are allowed to write the main memory addresses that are missing into the cache unit to be processed.

Of course, the cache unit to be processed may be either a cache unit to be replaced that is already occupied but may be replaced, or a free cache unit that is not occupied, that is, no main memory address information exists in the free cache unit.

It is easy to understand that in a case where the main memory address information exists in the cache unit to be replaced, the original main memory address information in the cache unit to be replaced is required to be different from each of the main memory addresses corresponding to the data that is required by the data processing request, otherwise, a problem that the cache still does not include all the requested data occurs after all the missing data is read into the cache. Of course, main memory address information may also be absent in the cache unit, that is, an empty cache unit.

Specifically, the cache unit to be processed may be determined based on the Least Recently Used principle (RLU).

The cache units to be processed are determined, and the main memory addresses that are missing are written into each of the cache units to be processed, but the data is not written to each of the cache units to be processed, so that the main memory addresses that are missing are written into the cache units corresponding to the main memory addresses.

In addition, it is easy to understand that the main memory address that is missing described in this article indicates a base address that is stored in each of the cache units in address information that is missing.

In an alternative implementation, the cache unit to be processed does not have the requirement that the main memory address of the cache unit to be processed is different from each of the main memory address information corresponding to the data that is required by the data processing request, but after each replacement, the cache unit to be processed is required to check whether the cache includes all the requested data, in response to all the requested data being not included in the cache, repeating the process until detecting that all the requested data is included in the cache.

In this way, by respectively writing each of the main memory addresses that are missing to each of the cache units to be processed, smooth execution of data reading or data writing may be maintained on the basis of improving the efficiency of data transmission.

In order to understand conveniently, the embodiment of the present disclosure also provides a data processing method to illustrate a specific processing method upon data reading, and Fig. 6 illustrates another flowchart of the data processing method provided by the embodiment of the present disclosure.

It is easy to understand that the flowchart shown in Fig. 6 is a flowchart in a case where a data processing request is a data read request. Because most of the steps in the figure are similar to the steps in Fig. 4, the content in the part is not described specifically. As shown in Fig. 6, the process may include the following steps.

In Step S500, receive a data read request.

For the specific content of Step S500, please refer to the description of Step S400 shown in Fig. 4, of course, the data processing request is a data read request, and other contents are not repeated herein.

In Step S510, determine whether the main memory address information of each of the cache units that satisfy a mapping relationship includes all the main memory addresses, if so, execute Step S520, and if not, execute Step S530.

For the specific content of Step S510, please refer to the description of Step S410 shown in Fig. 4, which is not repeated herein.

In Step S520, return data corresponding to all the main memory addresses simultaneously.

For the specific content of Step S520, please refer to the description of Step S420 shown in Fig. 4, of course, because the data processing request is a data read request, in a case where the data is processed, all the data corresponding to the main memory addresses is returned simultaneously.

In this way, reading the data corresponding to each of the main memory addresses is implemented, and the efficiency of data reading is improved because the data may be returned simultaneously.

In another specific embodiment, in a case where each of the main memory addresses that are missing exists, in order to maintain reading the data smoothly, the following steps are also included: in Step S530, respectively write each of the main memory addresses that are missing into each of the cache units to be processed.

For the specific content of Step S530, please refer to the description of Step S430 shown in Fig. 4, which is not repeated herein.

In Step S540, generate and send missing data read requests for reading the data corresponding to each of the main memory addresses that are missing.

In a case where each of the main memory addresses that are missing exists, the implementation of data reading, is required to generate missing data read requests for the data corresponding to each of the main memory addresses that are missing, and send the missing data read requests to the next module (such as a level two cache or a main memory).

It can be seen that for the data read request, when all the main memory addresses are not included in the main memory address information of each cache unit that satisfies the mapping relationship, missing data read requests for reading the data corresponding to each of the main memory addresses that are missing is also generated and sent, thus ensuring the realization of data reading.

In a case where the main memory addresses that are missing are a plurality of addresses, a plurality of situations occur according to continuity or discontinuity. For example, the missing data is also consecutive data, the missing data is partially consecutive and partially inconsecutive, or the missing data is all inconsecutive. In some embodiments, with respect to the data corresponding to several missing and consecutive main memory addresses, a new merged data read request may be sent. In other embodiments, regardless of whether missing data is consecutive, a data read request is sent to the data in each cache unit separately. Different processing methods affect the subsequent processing, and the following takes two different implementation examples.

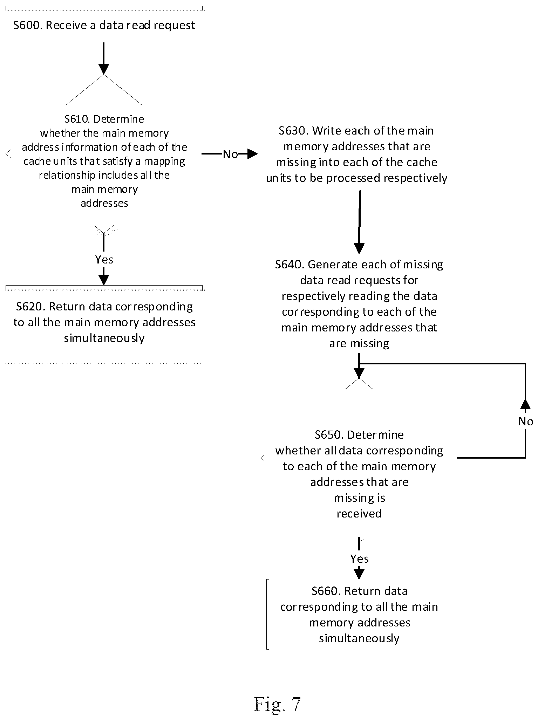

Fig. 7 illustrates an implementation example diagram of a data processing method that is provided by an embodiment of the present disclosure.

It is noted that most of the content in Fig. 7 is similar to the steps in Fig. 6, and the content in the part is not described specifically. As shown in Fig. 7, the example may include the following steps.

In Step S600, receive a data read request.

In Step S610, determine whether the main memory address information of each of the cache units that satisfy a mapping relationship includes all the main memory addresses, if so, then execute Step S620, and if not, then execute Step S630.

In Step S620, return data corresponding to all the main memory addresses simultaneously.

In Step S630, respectively write each of the main memory addresses that are missing into each of the cache units to be processed.

For the specific content of Step S600-Step S630, please refer to the description of Step S400-Step S430 shown in Fig. 4, and is not repeated here.

In Step S640, generate each of missing data read requests for respectively reading the data corresponding to each of the main memory addresses that are missing.

Whether the missing data is one or more than one, more than one are all consecutive or partially consecutive, missing data read requests are respectively generated for the data corresponding to the main memory address of each cache unit, and the missing data read requests are sent to the next module one by one. Each data request only requests for reading the missing data corresponding to the main memory address of one cache unit, and a number of the missing data read requests is the same as a number of the main memory addresses that are missing. The next level module may be a cache or a main memory, in response to a sending module being the lowest level cache, the next level module is a main memory. In response to a sending module is a level one cache, the next level module is a level two cache.

In step S650, determine whether all data corresponding to each of the main memory addresses that are missing is received, if so, execute step S660, otherwise, wait and determine again.

After sending missing data read requests for acquiring data to the next level module, whether receiving all the missing data is required to be determined, until all the missing data is acquired, the data corresponding to all the main memory addresses is returned simultaneously.

Of course, in response to the next level module being a lower level cache, part of the requested data being missing in the next level module still exists, then a request is sent to the next level module. It is easy to understand that the specific process is consistent with the above process, and is not repeated here.

In Step S660, return data corresponding to all the main memory addresses simultaneously.

For the specific content of Step S660, please refer to the description of Step S520 shown in Fig. 5, which is not repeated herein.

In this way, respectively generating each of the missing data read requests may reduce the complexity of the data processing method, and after receiving the data, simultaneously returning the data corresponding to all the main memory addresses may also improve the efficiency of data transmission.

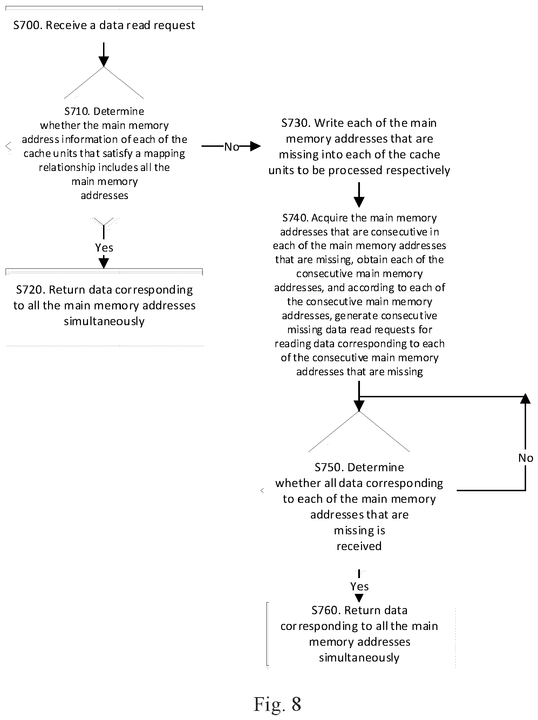

Fig. 8 illustrates another example of a data processing method that is provided by the embodiment of the present disclosure. It is noted that the difference between the example in Fig. 8 and the example in Fig. 7 is mainly the processing of missing data, so the other steps are not described specifically. As shown in Fig. 8, the example may include the following steps.

In Step S700, receive a data read request.

In Step S710, determine whether the main memory address information of each of the cache units that satisfy a mapping relationship includes all the main memory addresses. If so, then execute Step S720, and if not, then execute Step S730.

In Step S720, return data corresponding to all the main memory addresses simultaneously.

In Step S730, respectively write each of the main memory addresses that are missing into each of the cache units to be processed.

For the specific content of Step S700-Step S730, please refer to the description of the corresponding part above, and is not repeated here.

In Step S740, acquire the main memory addresses that are consecutive in each of the main memory addresses that are missing, obtain each of the consecutive main memory addresses, and according to each of the consecutive main memory addresses, generate consecutive missing data read requests for reading data corresponding to each of the consecutive main memory addresses that are missing.

In a case where missing data read requests are generated, in order to further improve the efficiency of data transmission, the main memory addresses that are missing may be further acquired, then a new consecutive main memory address is determined, and consecutive missing data read requests are generated based on the consecutive main memory address.

Of course, it is easy to understand that for the main memory address that is not allowed to be determined as a consecutive main memory address, according to each of the main memory addresses, respectively generating missing data read requests is required.

In order to understand conveniently, an example is taken as follow.

For example, the main memory addresses of missing data are respectively M1, M2 and N1, wherein the main memory address M1 and the main memory address M2 are consecutive, then the consecutive missing data read requests are generated the main memory address N1 is inconsecutive with M1 and M2, then the missing data read requests is generated, and the consecutive missing data read requests corresponding to the main memory address M1 and M2, and the missing data read requests corresponding to the main memory address N1 are sent to the next module.

In step S750, determine whether all data corresponding to each of the main memory addresses that are missing is received, if so, then execute step S760, and if not, then repeat the determination.

In Step S760, return data corresponding to all the main memory addresses simultaneously.

In a case where the main memory address information of each of the cache units that satisfy a mapping relationship does not include all the main memory addresses, the missing data read requests that are generated are still allowed to include the request for reading the data corresponding to each of the consecutive main memory addresses that are missing, thereby further improving the efficiency of data transmission in the process of data reading.

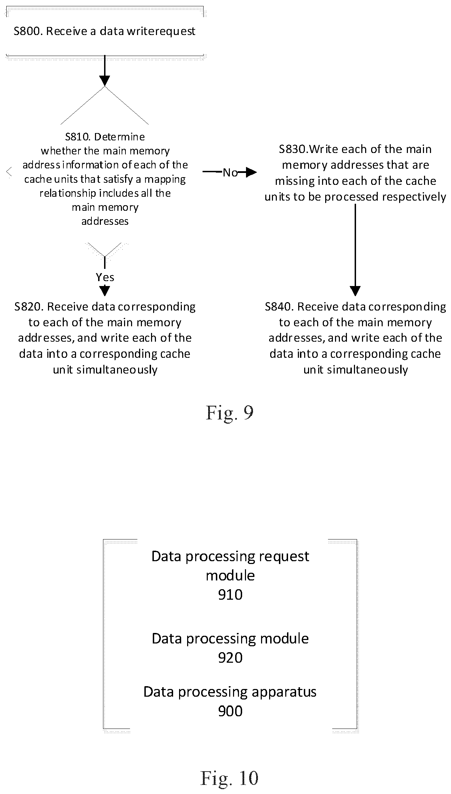

In addition to being able to improve the data transmission efficiency upon reading data, in a case where the data is written, the transmission efficiency of data may also be improved, so the embodiment of the present disclosure also provides a data processing method, please refer to Fig. 9, Fig. 9 illustrates yet another flowchart of the data processing method that is provided by the embodiment of the present disclosure.

As shown in Fig. 9, the process may include the following process.

Step S800, receive a data write request.

For the specific content of Step S800 please refer to the description of Step S400 shown in Fig. 4, of course, the data processing request is a data write request, and other contents are not repeated here.

Step S810, determine whether the main memory address information of each of the cache units that satisfy a mapping relationship includes all the main memory addresses. If so, then execute Step S820, and if not, then execute Step S830.

For the specific content of Step S810, please refer to the description of Step S410 shown in Fig. 4, which is not repeated herein.

Step S820, simultaneously receive data corresponding to each of the main memory addresses, and write each of the data into a corresponding cache unit.

For the specific content of Step S820, please refer to the description of Step S420 shown in Fig. 4, of course, because the data processing request is a data write request, in a case where the data is processed, the data is written into the cache unit or main memory corresponding to the main memory address simultaneously.

In this way, in the data processing method that is provided by the embodiment of the present disclosure, the received data write request corresponds to at least two cache units, each of the cache units simultaneously determines whether a hit exists, and in response to a hit, the data in each of the cache units is written simultaneously, the data channel width between the various levels of caches, between a cache and a computation unit, and between a cache and a main memory may be increased to improve the data transmission efficiency without changing the size of the cache unit, thereby avoiding the change of the mapping relationship that is required for widening the cache unit, and the resulting increase in workload, increasing the bandwidth to improve the data transmission efficiency may be implemented on the basis of smaller workload.

The writing of data corresponding to each of the main memory addresses may be implemented, and because the data may be written simultaneously, the efficiency of data writing is improved.

In another embodiment, Step S830, respectively writing each of the main memory addresses that are missing into each of the cache units to be processed may also be included.

For the specific content of Step S830, please refer to the description of Step S430 shown in Fig. 4, of course, because the data processing request is a data write request, each of the main memory addresses that are missing is written into each of the cache units to be processed.

Step S840, simultaneously receive data corresponding to each of the main memory addresses, and write each of the data into a corresponding cache unit.

After all main memory addresses that are missing are written into a high-level cache, the received data is written into the corresponding cache unit respectively.

For the data processing method provided by the embodiment of the present disclosure, a data write request that is received corresponds to at least two cache units, each of the cache units simultaneously determines whether a hit exists, and in response to a hit being absent, each of the main memory addresses that are missing is written into each of the cache units to be processed, and then the data in each of the cache units is written simultaneously, the data channel width between the various levels of caches, between a cache and a computation unit, and between a cache and a main memory may be increased to improve the data transmission efficiency without changing the size of the cache unit, thereby avoiding the change of the mapping relationship that is required for widening the cache unit, and the resulting increase in workload, increasing the bandwidth to improve the data transmission efficiency may be implemented on the basis of smaller workload.

A plurality of embodiments of the present disclosure are described above, and the alternative methods introduced by each embodiment are allowed to be combined and cross-referenced without conflict, thereby extending a plurality of possible embodiments, the possible embodiments are allowed to be considered as disclosed by the embodiments of the present disclosure.

The embodiments of the present disclosure also provide a data processing apparatus, the apparatus may be considered to be a functional module that is required to be set for implementing the data processing method that is provided by the embodiments of the present disclosure. The content of the apparatus that is described in this article and the content of the method that is described above correspond and refer to each other.

Fig. 10 illustrates a block diagram of a data processing apparatus that is provided by the embodiment of the present disclosure. The apparatus may be applied to the data processing method that is provided by the embodiment of the present disclosure. Referring to Fig. 10, the apparatus may include:

A data processing request module 910 is suitable for receiving a data processing request, data requested by the data processing request includes data that is suitable for being stored in at least two cache units, and the main memory addresses of the data in each of the cache units are consecutive.

A data processing module 920 is suitable for in a case where the main memory address information of each of the cache units that satisfy a mapping relationship includes all the main memory addresses, processing the data corresponding to each of the main memory addresses simultaneously, wherein each of the cache units that satisfy the mapping relationship indicates the cache unit corresponding to the main memory address in the data processing request.

In some embodiments, the data processing module 920 is also suitable in a case where the main memory address information of each of the cache units that satisfy the mapping relationship does not include all the main memory addresses, each of the main memory addresses that are missing is written into each of the cache units to be processed, wherein the original main memory address information of each of the cache units to be processed is different from the main memory address of the data requested by the data processing request.

In some embodiments, the data processing request module 910 may be a data read request module, and is suitable for receiving a data read request, the data requested by the data read request includes the data that is suitable for being stored in at least two cache units, and the main memory addresses of the data in each of the cache units are consecutive.

The data processing module 920 may be a data read operation module, and is suitable for in a case where the main memory address information of each of the cache units that satisfy the mapping relationship includes all the main memory addresses, returning the data corresponding to all the main memory addresses simultaneously.

In other embodiments, the data read operation module is also suitable for in a case where the main memory address information of each of the cache units that satisfy the mapping relationship does not include all the main memory addresses, respectively writing the main memory addresses that are missing into each of the cache units to be processed, and generating and sending the missing data read requests for reading the data corresponding to each of the main memory addresses that are missing.

In some embodiments, the data read operation module, is suitable for generating and sending missing data read requests for reading the data corresponding to each of the main memory addresses that are missing, including: respectively generating each of the missing data read requests for respectively reading the data corresponding to each of the main memory addresses that are missing, a number of the missing data read requests is the same as a number of the main memory addresses that are missing.

The data read operation module is also suitable for in a case of receiving all data corresponding to each of the main memory addresses that are missing, simultaneously returning data corresponding to all the main memory addresses.

In some embodiments, the data read operation module is suitable for generating and sending missing data read requests for reading the data corresponding to each of the main memory addresses that are missing, including: acquiring main memory addresses of addresses being consecutive in each of the main memory addresses that are missing, obtaining each of the consecutive main memory addresses; according to each of the consecutive main memory addresses, generating consecutive missing data read requests for reading the data corresponding to each of the consecutive main memory addresses that are missing; the data read operation module, also suitable for returning the data corresponding to all the main memory addresses in a case where the data corresponding to all the main memory addresses and each of the main memory addresses that are missing.

In other embodiments, the data processing request module 910 is allowed to be a data write request module, and is suitable for receiving a data write request, the data requested by the data write request comprises data that is suitable for being stored in at least two cache units, and the main memory addresses of the data in each of the cache units are consecutive.

The data processing module 920 may be a data write operation module, and is suitable for in a case where the main memory address information of each of the cache units that satisfy a mapping relationship includes all the main memory addresses, respectively writing the data corresponding to all the main memory addresses.

In other embodiments, the data write operation module is also suitable for in a case where the main memory address information of each of the cache units that satisfy a mapping relationship does not include all the main memory addresses, respectively writing each of the main memory addresses that are missing into each of the cache units to be processed, and simultaneously receiving the data corresponding to each of the main memory addresses, and writing each of the data into a corresponding cache unit.

For the data processing apparatus that is provided by the embodiment of the present disclosure, a data processing request that is received by the data processing request module 910 corresponds to at least two cache units, the data processing module 920 determines whether each of the cache units is hit simultaneously, and the data in each of the cache units is returned simultaneously upon hitting, and the data channel width between various levels of caches, between a cache and a computation unit, and between a cache and a main memory may be increased to improve data transmission efficiency without changing the size of the cache unit, thereby avoiding the change of the mapping relationship that is required for widening the cache unit, and the resulting increase in workload, increasing the bandwidth to improve the data transmission efficiency may be implemented on the basis of smaller workload; further, in a case where the proportion of a number of read/write requests is inconsistent, the proportion of data transmission bandwidth of the read/write requests may also be changed between two adjacent levels of transmission, so that the data transmission is more suitable for the usage requirement.

At least one embodiment of the present disclosure also provides a cache, the cache may include a level one cache and a level two cache, at least two cache units of the level one cache and at least two cache units of the level two cache are mapped simultaneously, and the level one cache and the level two cache both include a data processing apparatus that is provided by the embodiment of the present disclosure.

In this way, by making at least two cache units of the level one cache and at least two cache units of the level two cache mapped simultaneously, transmitting data of at least two cache units simultaneously may be implemented, and the data channel width between various levels of caches may be increased to improve the data transmission efficiency without changing the size of the cache unit.

At least one embodiment of the present disclosure also provides a processor, the processor executes computer-executable instructions to implement the data processing methods that are provided by the embodiment of the present disclosure.

At least one embodiment of the present disclosure also provides an electronic device, the electronic device may include the processor that is provided by the embodiment of the present disclosure.

Although the embodiments of the present disclosure are disclosed as above, the present disclosure is not limited herein. Anyone of those skilled in the art may make various changes and modifications without departing from the spirit and scope of the present disclosure, so the scope of protection of the present disclosure shall be subject to the scope that is limited by claims.

## Claims

1. A data processing method, comprising:
receiving a data processing request, wherein data requested by the data processing request comprises data that is suitable for being stored in at least two cache units, and main memory addresses of data in each of the cache units are consecutive; and
in a case where the main memory address information of each of the cache units that satisfy a mapping relationship comprises all the main memory addresses, simultaneously performing data processing on data corresponding to each of the main memory addresses, wherein each of the cache units that satisfy the mapping relationship is a cache unit corresponding to a main memory address in the data processing request.

2. The data processing method of claim 1, further comprising:
in a case where the main memory address information of each of the cache units that satisfy the mapping relationship does not comprise all the main memory addresses, respectively writing each of the main memory addresses that are missing into each of the cache units to be processed, wherein original main memory address information of each of the cache units to be processed is different from each of the main memory addresses corresponding to data of the data processing request.

3. The data processing method of claim 2, wherein the cache units to be processed comprise at least one of a cache unit to be replaced and a free cache unit.

4. The data processing method of claim 3, wherein the cache units to be replaced are determined by a Least Recently Used principle (RLU).

5. The data processing method of any one of claims 1-4, wherein the data processing request comprises a data read request, and in a case where the main memory address information of each of the cache units that satisfy the mapping relationship comprises all the main memory addresses, the step of simultaneously performing data processing on data corresponding to each of the main memory addresses, comprises:
in a case where the main memory address information of each of the cache units that satisfy the mapping relationship comprises all the main memory addresses, simultaneously returning data corresponding to all the main memory addresses.

6. The data processing method of any one of claims 2-4, wherein the data processing request comprises a data read request, and in a case where the main memory address information of each of the cache units that satisfy the mapping relationship does not comprise all the main memory addresses, after the step of respectively writing each of the main memory addresses that are missing into each of the cache units to be processed, further comprises:
generating and sending missing data read requests for reading data corresponding to each of the main memory addresses that are missing.

7. The data processing method of claim 6, wherein the step of generating the missing data read requests for reading data corresponding to each of the main memory addresses that are missing comprises:
generating each of the missing data read requests for respectively reading data corresponding to each of the main memory addresses that are missing, wherein a number of the missing data read requests is same as a number of each of the main memory addresses that are missing; and
the data processing method further comprises:
in a case of receiving all data corresponding to each of the main memory addresses that are missing, simultaneously returning data corresponding to all the main memory addresses.

8. The data processing method of claim 6 or 7, wherein the step of generating the missing data read requests for reading data corresponding to each of the main memory addresses that are missing comprise:
acquiring main memory addresses of addresses being consecutive in each of the main memory addresses that are missing, and obtaining each of consecutive main memory addresses;
generating consecutive missing data read requests for reading data corresponding to each of the consecutive main memory addresses that are missing according to each of the consecutive main memory addresses; and
the data processing method further comprises:
in a case of receiving all data corresponding to each of the main memory addresses that are missing, simultaneously returning data corresponding to all the main memory addresses.

9. The data processing method of any one of claims 1-8, wherein the data processing request comprises a data write request, and in a case where the main memory address information of each of the cache units that satisfy the mapping relationship comprises all the main memory addresses, the step of simultaneously performing data processing on data corresponding to each of the main memory addresses, comprises:
in a case where the main memory address information of each of the cache units that satisfy the mapping relationship comprises all the main memory addresses, simultaneously receiving data corresponding to each of the main memory addresses, and writing each of the data into a corresponding cache unit.

10. The data processing method of claims 2-4, wherein the data processing request comprises a data write request, and in a case where the main memory address information of each of the cache units that satisfy the mapping relationship does not comprise all the main memory addresses, after the step of respectively writing each of the main memory addresses that are missing into each of the cache units to be processed, further comprises:
simultaneously receiving data corresponding to each of the main memory addresses, and writing each of the data into a corresponding cache unit.

11. The data processing method of any one of claims 1-10, wherein the data processing request further comprises a data processing request type identification, and the data processing request type identification is used for identifying that data requested by the data processing request comprises data suitable for being stored in at least two cache units.

12. The data processing method of claim 11, wherein an implementation method of the data processing request type identification comprises increasing a number of main memory address identification bits or increasing a type of request type identification.

13. A data processing apparatus, comprising:
a data processing request module, suitable for receiving a data processing request, wherein data requested by the data processing request comprises data that is suitable for being stored in at least two cache units, and main memory addresses of data in each of the cache units are consecutive; and
a data processing module, suitable for in a case where main memory address information of each of cache units that satisfy a mapping relationship comprises all the main memory addresses, simultaneously performing data processing on data corresponding to each of the main memory addresses, wherein each of the cache units that satisfy the mapping relationship is a cache unit corresponding to a main memory address in the data processing request.

14. The data processing apparatus of claim 13, wherein the data processing module is also suitable for in a case where the main memory address information of each of the cache units that satisfy the mapping relationship does not comprise all the main memory addresses, respectively writing each of the main memory addresses that are missing into each of cache units to be processed, wherein original main memory address information of each of the cache units to be processed is different from a main memory address of data requested by the data processing request.

15. The data processing apparatus of claim 13 or 14, wherein the data processing request module comprises:
a data read request module, suitable for receiving a data read request, data requested by the data read request comprising data that is suitable for being stored in at least two cache units, and main memory addresses of data in each of the cache units being consecutive; and
the data processing request module comprises:
a data read operation module, suitable for a case where the main memory address information of each of the cache units that satisfy the mapping relationship comprises all the main memory addresses, simultaneously returning data corresponding to all the main memory addresses.

16. The data processing apparatus of claim 14, wherein the data processing request module comprises:
a data read request module, suitable for receiving a data read request, data requested by the data read request comprising data that is suitable for being stored in at least two cache units, and main memory addresses of data in each of the cache units being consecutive; and
the data processing request module comprises:
a data read operation module, suitable for in a case where the main memory address information of each of the cache units that satisfy the mapping relationship does not comprise all the main memory addresses, respectively writing each of the main memory addresses that are missing into each of cache units to be processed, and generating and sending missing data read requests for reading data corresponding to each of the main memory addresses that are missing.

17. The data processing apparatus of claim 16, wherein the data read operation module, suitable for generating and sending missing data read requests for reading data corresponding to each of the main memory addresses that are missing, comprises:
generating each of the missing data read requests for respectively reading data corresponding to each of the main memory addresses that are missing, wherein a number of the missing data read requests is the same as a number of each of the main memory addresses that are missing; and
the data read operation module, also suitable for in a case of receiving all data corresponding to each of the main memory addresses that are missing, simultaneously returning data corresponding to all the main memory addresses.

18. The data processing apparatus of claim 16, wherein the data read operation module, suitable for generating and sending missing data read requests for reading data corresponding to each of the main memory addresses that are missing comprises:
acquiring main memory addresses of addresses being consecutive in each of the main memory addresses that are missing, and obtaining each of consecutive main memory addresses; and
generating consecutive missing data read requests for reading data corresponding to each of the consecutive main memory addresses that are missing according to each of the consecutive main memory addresses.

19. The data processing apparatus of any one of claims 13-18, wherein the data processing request module comprises:
a data write request module, suitable for receiving a data write request, data requested by the data write request comprising data that is suitable for being stored in at least two cache units, and main memory addresses of data in each of the cache units are consecutive; and
the data processing module comprises:
a data write operation module, suitable for in a case where the main memory address information of each of the cache units that satisfy the mapping relationship comprises all the main memory addresses, simultaneously writing data corresponding to all the main memory addresses.

20. The data processing apparatus of claim 14, wherein the data processing request module comprises a data write request module, the data processing apparatus comprising:
a data write operation module, suitable for in a case where the main memory address information of each of the cache units that satisfy the mapping relationship does not comprise all the main memory addresses, respectively writing each of the main memory addresses that are missing into each of the cache units to be processed, simultaneously receiving data corresponding to each of the main memory addresses, and writing each of the data into a corresponding cache unit.

21. The data processing apparatus of any one of claims 13-20, wherein the data processing request further comprises a cache unit index of each of the cache units and a data processing request type identification, and the data processing request type identification is configured to identify data that is suitable for being stored in at least two cache units and is comprised by data requested by the data processing request.

22. The data processing apparatus of claim 21, wherein an implementation method of the data processing request type identification comprises increasing a number of main memory address identification bits or increasing a type of request type identification.

23. A cache, comprising a level one cache and a level two cache, wherein at least two cache units of the level one cache and at least two cache units of the level two cache are mapped simultaneously, and the level one cache and the level two cache both comprise the data processing apparatus of any one of claims 13-22.

24. A processor, wherein the processor executes computer-executable instructions to implement the data processing method of any one of claims 1-12.

25. An electronic device, comprising the processor of claim 24.
